# EUROPEAN PATENT SPECIFICATION

(11) **EP 1 692 818 B1**
(45) Date of publication and mention of the grant of the patent: **14.08.2013**
(21) Application number: 03754329.5
(22) Date of filing: 16.10.2003
(51) Int. Cl.: H04L 12/28

(54) **ACCESS TO CDMA/UMTS SERVICES OVER A WLAN ACCESS POINT, USING A GATEWAY NODE BETWEEN THE WLAN ACCESS POINT AND THE SERVICE PROVIDING NETWORK**
ZUGANG ZU CDMA/UMTS-DIENSTEN ÜBER EINEN WLAN-ZUGANGSPUNKT UND UNTER VERWENDUNG EINES GATEWAY-KNOTENS ZWISCHEN DEM WLAN-ZUGANGSPUNKT UND DEM DIENSTBEREITSTELLUNGSNETZWERK
ACCES A DES SERVICES CDMA/UMTS SUR UN POINT D'ACCES WLAN AU MOYEN D'UN NOEUD PASSERELLE ENTRE LE POINT D'ACCES WLAN ET LE RESEAU FOURNISSEUR DE SERVICES

(43) Date of publication of application: 23.08.2006
(73) Proprietor: TELEFONAKTIEBOLAGET LM ERICSSON (publ), 164 83 Stockholm (SE)
(72) Inventor: KHOURY, David, S-111 64 Stockholm (SE); SHARP, Andrew, S-181 30 Lidingö (SE)
(74) Representative: Althoff, Fredrik
(86) International application number: PCT/SE2003/001601
(87) International publication number: WO 2005/039114

(56) References cited:
- WO-A2-03/101025
- GB-A- 2 358 765
- SALKINTZIS, A.K.: 'Interworking between WLANs and third-generation cellular data networks' 57TH IEEE SEMIANNUAL VEHICULAR TECHN. CONF. JEJU, SOUTH KOREA vol. 3, April 2003, pages 1802 - 1806, XP002977251 & DATABASE INSPEC [Online] Database accession no. 7921906
- VARMA, V. K. ET AL.: 'Mobility management in integrated UMTS/WLAN networks' IEEE INT. CONF. ON COMMUNICATIONS, ANCHORAGE, AK, USA vol. 2, May 2003, pages 1048 - 1053, XP002977252 & DATABASE INSPEC [Online] Database accession no. 7905811

## Description

The present invention relates to a radio network control node for providing a WLAN supporting user station with access to one or more service providing networks. The invention also related to a method for providing a WLAN supporting user station with access to services of a service providing network.

### STATE OF THE ART

In the society of today it is getting more and more important for a user to be able to access services of different kinds in a manner which is as simple and easy as possible. Examples of such services are speech services, data communication services, video services and, in general, any media service. Access to the increasing numbers of services, from a home or from an office, can be provided using generally different available access technologies such as telephony for example via PSTN or via mobile communications networks, television channels for example over cable and satellite, Internet which can be provided via modem connection over PSTN, broadband or via Ethernet cable connection. For wireless user stations there are different possibilities to access services with the introduction of 3GPP (Third Generation Partnership Project), UMTS (Universal Mobile Telephony System), GPRS (GSM Global Packet Radio Service), a mobile user gets a wide coverage as far as different alternatives are concerned, e.g. real time services, but the data rates are quite slow.

A so called WLAN (Wireless Local Area Network) could be said to constitute an excellent complement to for example UMTS. WLAN offers very high data transfer rates, but coverage is unfortunately limited to public hotspot areas, particularly (public) indoor hotspots. The optimum for the user would be to have access opportunity through these both technologies or rather a combination of both. WLAN is primarily used for high-speed data transmission in Local Area Networks. Any one with a WLAN capable device, any device equipped with a wireless LAN card, can access the Internet. The WLAN is optimized for data services, but not for real time services such as voice. Today it is also not possible to have bandwidth on demand for different media services (voice, data and video) on the same access links controlled by one and the same node and independently of transport layer technology, which is a drawback. Each media type generally requires its own network and its own access network with network specific switches and specific access termination equipment.

So far it has not been possible to use WLAN for accessing for example an UMTS network since there are several problems associated therewith. If a WLAN user would be interested in accessing e.g. an UMTS network outside the WLAN hotspot area, this is not possible since interoperability between carriers of both networks is needed. One reason that it is not possible is due to the fact that the integration between an UMTS network and WLAN is designed merely on the authentication level but it is a very loose integration based on roaming between UMTS network and WLAN network. So far no satisfactory solution has been found as to the provisioning of an end user station with access to different kinds of services, i.e. services of different types, different bandwidths, different bit rates, different QoS etc. in a simple and straightforward manner. There is also no solution to the provisioning of dynamic access bearer handling/dynamic bandwidth allocation of various services on one connection link.

The user still has to rely on different access technologies/access networks to access different services, which is most disadvantageous and complicated.

In Salkintzis, A K, "Interworking between WLANs and third-generation cellular data networks", 57th IEEE Semiannual Vehicular Techn Conf. VTC 2003, Jeju, South Korea, 22-25 April 2003. Conf Art, Publ 2003, Piscataway, NJ, USA, pages 1802-1806, vol 3. AN 7921906, ISBN 0-7803-7757-5, it is proposed to use IP to tunnel service network protocols, *(e.g. UMTS protocols)* over WLAN. The solution is based on the introduction of a new adaption layer WAF *(WLAN Adaptation Function)* which is integrated in the 802.11 layer, i.e. integrated in the WLAN protocol layer.

A key functional element is the GPRS Interworking Function (GIF) which is connected to MS and GPRS via the standard Gb interface. This document does also not provide a satisfactory solution to the mentioned problems.

### SUMMARY OF THE INVENTION

What is needed is therefore a radio network control node through which a user station, e.g. a PC, a laptop, a telephone etc. can be provided with access to a large number of services as provided over one or more service providing networks in an easy and straightforward manner. A radio network control node is also needed through which the user station can be provided with access to services while still having high data transfer rates. Particularly a radio network control radio is needed through which the user station can be provided with a high data transfer rate as available on a wireless LAN hotspot area or an area covered by a LAN. Particularly a radio network control node is needed through which a user station can be provided with multiple simultaneous access bearer connections of different types, bandwidths, QoS etc. in an easy manner. Particularly it is an object of the invention to provide a radio network control node able to take advantage of the possibilities as provided by a WLAN and at the same time take advantage of the wide spread service offer provided and capabilities of for example 3G networks, i.e. multimedia real time services, particularly 3G services of any kind in general.

A method through which one or more of the above mentioned objects can be fulfilled is also needed.

Therefore a radio network control node as initially referred to and having the characterizing features of claim 1 is provided. It comprises a radio access network control node, (which actually can be said to be based on the principles of an RNC (Radio Network Controller) node of a 3G system).

A method as initially referred to is therefore also provided, which has the characterizing features of claim 15.

Advantageous embodiments are given by the appended subclaims.

### BRIEF DESCRIPTION OF THE DRAWINGS

The invention will in the following be further described, in a nonlimiting manner and with reference to the accompanying drawings, in which:
- Fig. 1: schematically illustrates a radio access network control node (RANCN) according to the invention through which user stations are given access to 3G/UMTS circuit switched/packet switched core networks over WLAN,
- Fig. 2: illustrates a node as in Fig. 1 providing a user station with WLAN access to services, and mapping of services onto access bearers,
- Fig. 3: is a block diagram of the RRC, RLC, MAC protocols layers over WLAN,
- Fig. 4: is a block diagram schematically illustrating the functional entities of a WLAN capable user station,
- Fig. 5: schematically illustrates an RANCN in the form of a functional block diagram,
- Fig. 6: is a schematical view of the hardware of an RANCN as in Fig. 5,
- Fig. 7A: is a simplified signalling diagram of a connection control (RRC) connection setup procedure,
- Fig. 7B: is a simplified signalling diagram of an access bearer setup procedure,
- Fig. 8: is a more detailed signalling diagram between a WLAN capable user station and a 3G network,
- Fig. 9A: is a protocol diagram describing the protocols used in the user plane between a WLAN user station and for a packet switched core network,
- Fig. 9B: is a protocol diagram describing the protocols used in the user plane between a WLAN user station and a circuit switched core network,
- Fig. 10A: is a protocol diagram as in Fig. 9A for the control plane for a packet switched core network,
- Fig. 10B: is a protocol diagram similar to Fig. 9B but for the control plane for a circuit switched core network,
- Fig. 11: schematically illustrate the provisioning of media services across radio interfaces to a WLAN capable user station, and
- Fig. 12: schematically shows the provisioning of a network capable of transmitting media services across multiple interfaces to a plurality of user stations.

### DETAILED DESCRIPTION OF THE INVENTION

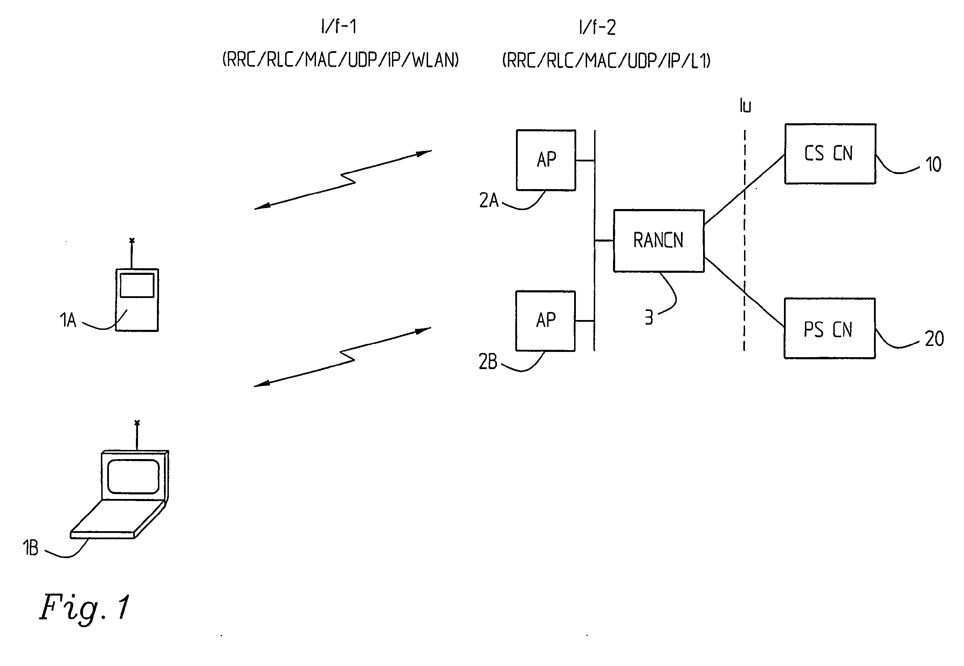

Fig. 1 is a block diagram illustrating a radio access network control node RANCN 3 according to the present invention which is provided between wireless LAN (WLAN) access points AP 2A, 2B and an UMTS core network, particularly a circuit switched core network CS CN 10 and a packet switched core network PS CN 20, the interface used to the RANCN being the Iu-interface. The user stations are here a wireless LAN telephone 1A and a Laptop 1B (particularly BreezeNet with a PCMCIA card as an example).

The RANCN 3 is a new node which can be seen as a modified RNC, radio network controller node. The interface I/f-2 between access points 2A, 2B and the RANCN 3 is an adapted interface in which the protocols RRC/RLC/MAC/UDP/IP/L1 are adapted to enable communication over a WLAN air interface. I/f-1 is also an adapted interface with adapted protocols RRC/RLC/MAC/UDP/IP/WLAN for communication between the user stations, in this case wireless LAN-phone 1A and laptop 1B, and RANCN 3. It can be seen in the figure that the access points AP 2A, 2B over the WLAN are connected to for example an UMTS network (CS CN 10 and PS CN 20 respectively) through the RANCN node 3. The role of the AP is to relay the RRC/RLC/MAC/UDP/IP over the transport technology used between the AP and the RANCN. The WLAN APs are not controlled by the RANCN. They are transparent access points to the broadband network. Adapted 3GPP protocols L3 RL RRC and L2 RLC/MAC can be said to be reused over the WLAN air interface fulfilling the WLAN 802.11 (b) specification which means that the user stations 1A, 1B can be given access to a service providers network. UMTS or 3G operator networks are only examples on service providing networks, a service provider (network) according to the concept of the present invention can in principle be any network which is capable of providing capability of setting up services (bearers) of variable bandwidth and/or QoS and/or type or of different bit rates.

In the user stations some new communication software is needed. This software particularly contains the protocol stacks as referred to above and as will more thoroughly discussed below, in order to be able to communicate with the UMTS network (or any other service providing network) through the establishment of different types of access bearers.

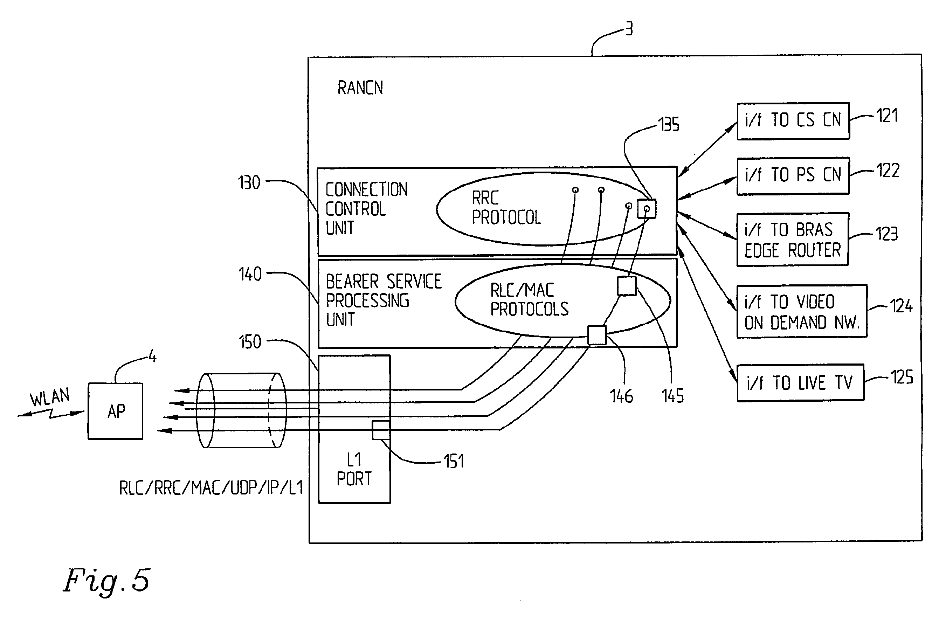

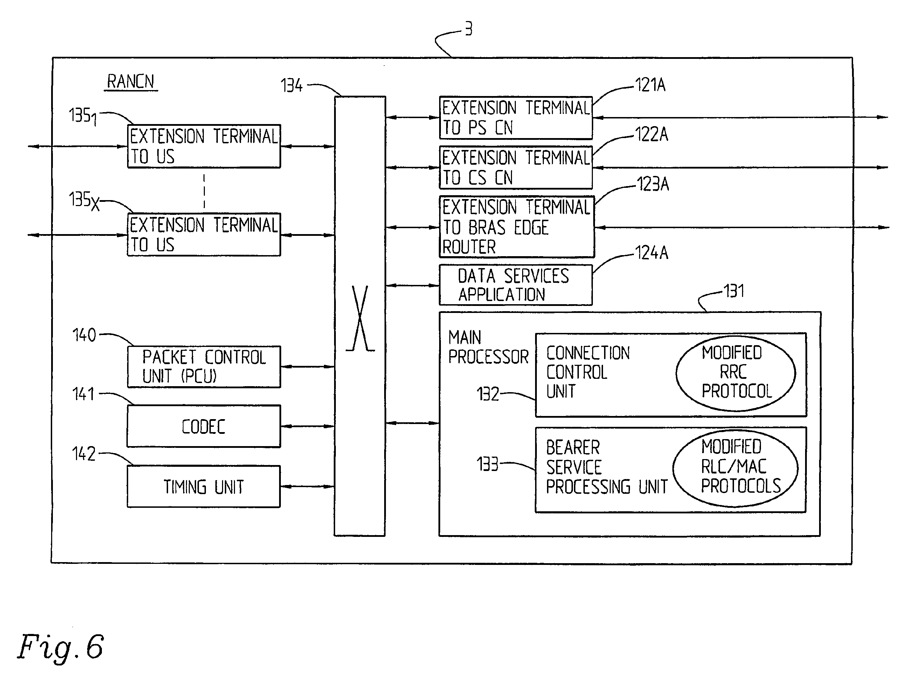

The RANCN 3 will be more thoroughly discussed below and particularly with reference to Figs. 5 and 6.

According to the invention WLAN can be said to be used as a broadband access network for a UMTS network or any of the service providing networks as discussed above. It makes it possible to access all available 3G services and real time services like voice and video calls over WLAN. Of course the solution according to the invention is applicable to any services as also discussed above.

In brief it could be said that simplified W-CDMA L3 (layer 3) RRC (Radio Resource Control protocol) and L2 (layer 2) RLC/MAC (Radio Link Control protocol/Medium Access Control protocol) are used over the WLAN radio/air interface (LLC, MAC, PHY) (Logical Link Control protocol, Physical Layer) between the WLAN capable user station and the RANCN 3. These protocols are tunneled transparently through the WLAN access points 2A, 2B connected to the RANCN 3. These sets of protocols will be used to set-up simultaneous multiple access bearers and to access the, in this case, UMTS core networks 10, 20 using the Iu interface. The RANCN 3 can be said to be based on a WCDMA radio network controller RNC and it controls access bearer set-up and release between a WLAN capable user station and (here) a UMTS core network by reusing the above mentioned protocols (RLC/MAC and RRC).

The RANCN 3 can be seen as gateway node between the WLAN access points and the Iu interface to the (here) UMTS core network. US Patent Application 60/462703 filed on April 15th, 2003 by the same applicant, discloses a modified node denoted ANCN and it is used to provide telecommunication and/or media services to a fixed location device or a stationary equipment unit. The content of this document is herewith incorporated herein by reference. The access network control node ANCN described in the patent application referred to discloses establishment of multiple access bearers to a stationary equipment unit which is connected to the Access Network Controller Node via an essentially fixed location physical link and the access node, ANCN, is connected to one or more external networks, for example service provider networks.

RANCN in the present application instead provides communication over WLAN and gives WLAN capable user stations the possibility of accessing services or service providing networks as discussed above. Briefly WLAN can be said to be Ethernet over radio. The wireless LAN 802.11 has been designed such that any LAN application or protocol including TCP/IP will run on an 802.11 wireless LAN as easily as they run over Ethernet. The data link layer within IEEE 802.11b consists of two sub-layers, namely the Logical Link Control (LLC) and the Medium Access Control (MAC). IEEE 802.11 uses the same IEEE 802.2 Ethernet LLC and 48-bit addressing as other IEEE 802 LAN:s, allowing a very simple bridging from wireless to wired networks according to IEEE, but the Medium Access Control sublayer is unique to WLAN. The physical layer and LLC and MAC constitute 802.11 WLAN. On the top thereof is the network layer TCP/IP, UDP/IP (Transfer Control Protocol/Internet Protocol, User Datagram Protocol/ Internet Protocol).

Thus, according to the present invention RLC/MAC, RRC are run over IP, but IP is run over IEEE 802.11b instead of Ethernet.

In advantageous implementations, these protocols allow dynamic establishment of different types of access bearers with different bit rates, and QoS requirements over WLAN and a mix of circuit switched and packet switched access bearers over the WLAN. RLC, MAC assures the QoS of real time applications in that they handle different types of access bearers and the RRC control plane protocol allows the user equipment to access the UMTS network.

It should be clear that the inventive concept is applicable to other protocols than RLC, RRC but having substantially the same structure or functionality.

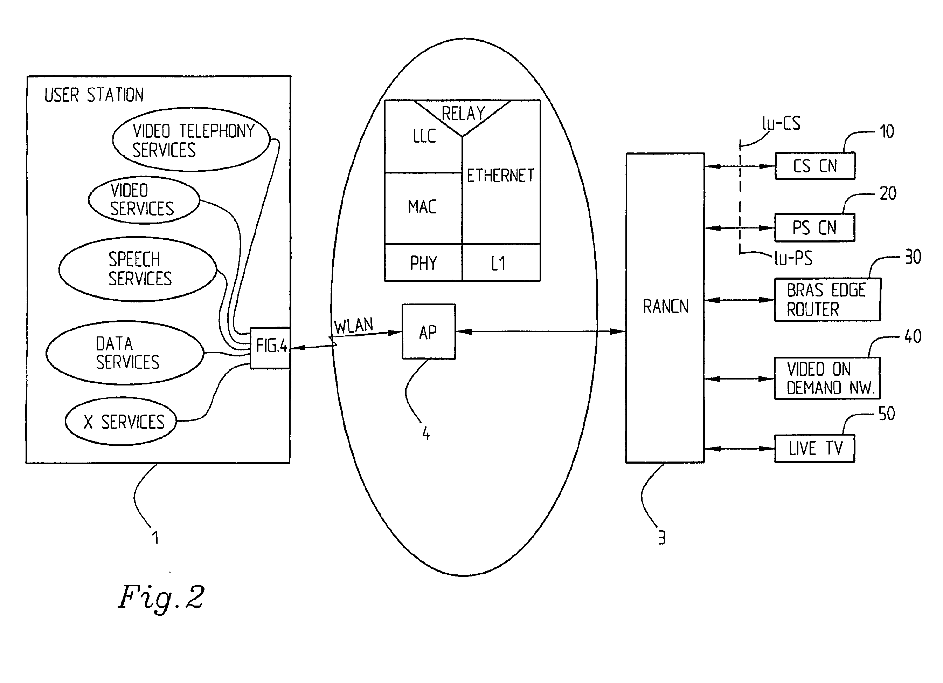

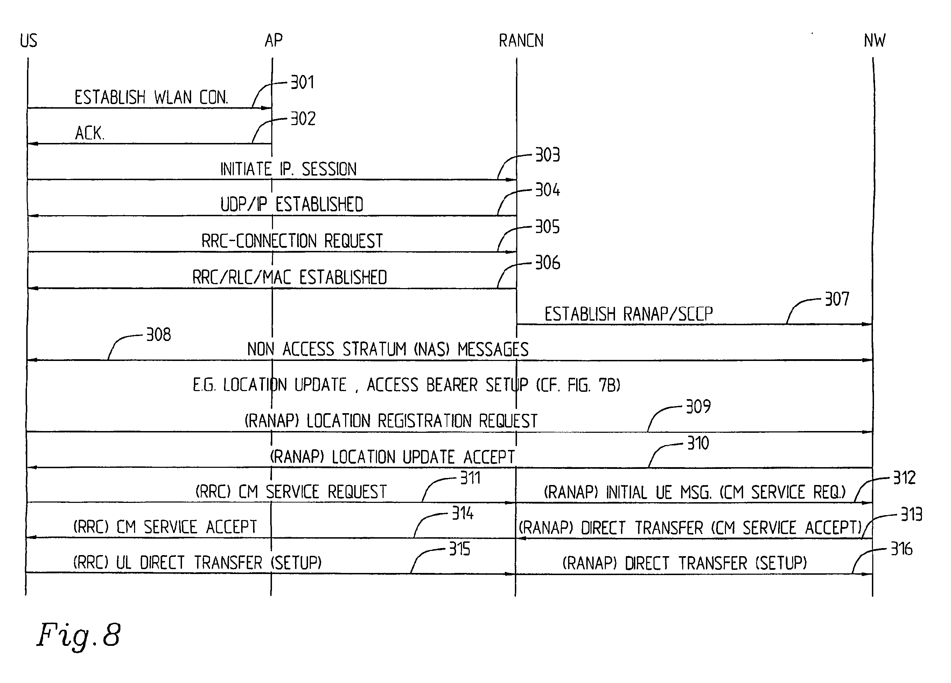

Fig. 2 schematically illustrates an example of a (media) access network with new set of access bearers. Particularly the figure illustrates mapping of services onto access bearers. A WLAN capable user station 1 is connected over WLAN to an RANCN 3 over an access point AP 4. The connection from user station 1 to RANCN 3 goes over WLAN, relayed through access point 4 and then over a broadband network to RANCN 3. Fig. 8 is a signalling diagram describing the signalling between user station and access point, access point and RANCN and ,in this case, a 3G network.

RANCN 3 can be connected to one or more external networks, particularly service providing networks 10, 20, 30, 40, 50. In the illustrated embodiment RANCN 3 is connected to a core network supporting the Iu interface, Iu CS and Iu PS for circuit switched and packet switched respectively. RANCN 3 is here connected across an Iu CS interface to a circuit switched (connection oriented) external network 10, across an Iu PS interface to a packet switched (connectionless) external network 20, to a Broadband Remote Access Server (BRAS) edge router 30, to a video on demand service network 40 and to a live television service network 50.

The core networks typically provide the traditional telecommunications core functions, such as subscription authentication, billing, routing etc.

It should be clear that an RANCN 3 could be connected to one or more of the illustrated networks, to other networks, in principle to any combination of service providing networks, or to a single service providing network etc.

In this application, an access bearer is taken to mean a logical connection with the user station 1 through the (media) access network controlled by RANCN 3. One access bearer may for example support one speech connection, whereas one of the other bearers supports one video connection and a third access bearer supports one or more data packet connections. Each access bearer is associated with quality of server (QoS) parameters describing how the data stream should be handled. Examples on QoS parameters are data rate, variability of data rate, amount and variability of delay, guaranteed versus best effort delivery, error rate etc. In the (media) access network an access bearer provides the ability to process and transfer user data with a variable bit rate and different QoS requirements through the RANCN 3 and between the WLAN capable user station 1 and the Iu interface.

The media access network, particularly by means of providing access through the RANCN 3 over a WLAN, is able to give the user station 1 access to a plurality of different media services. For exemplifying reasons it is shown in Fig. 2 that the user station 1 may be executing for example telephony services, video services, speech services, data services and x services meaning any other services not particularly denoted.

A number of types of services or combinations of service types may be operating at any moment in time.

Through the present invention it is made possible for a WLAN capable user station to access a plurality of services over WLAN. Two or more access bearers may be used substantially simultaneously. Generally the different access bearers have different bandwidth and different QoS. Thus, bandwidth on demand can be said to be provided to the user station 1. Connection bearers may carry one or more plural services of the same type.

For reasons of clarity only one user station is illustrated in the figure. Of course several user stations may be connected to RANCN 3. As referred to earlier in the application, and as it will be more thoroughly described below, RANCN adapts and reuses protocols on the external network, particularly RLC, MAC and RRC, and these protocols are relayed over the wireless LAN access point AP 4 substantially transparently.

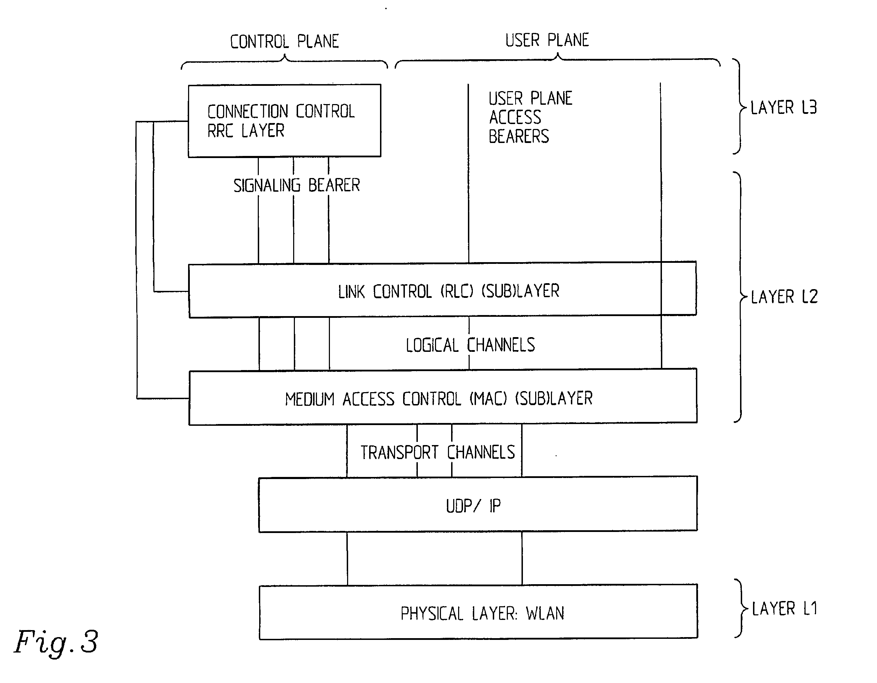

Fig. 3 schematically illustrates the concerned protocol layers. The (media) access network shown in Fig. 2b has a physical layer L1 which comprises a physical layer, WLAN. The protocol layers above the physical layer L1 are the data link layer, layer L2, and the network layer, layer L3. Layer L2 is split into two sublayers. In the control plane, layer L2 contains two sublayers, the first sublayer with the medium access control (MAC) protocol, and a second sublayer with the connection control (RLC) protocol. Between the physical layer WLAN and RLC/MAC layer is the UDP/IP layer. Layer 3 has e.g. the RRC (Radio Resource Control protocol) which belongs to the control plane. Layer 2 and layer 3 correspond to the layers of UTRAN, the UTRAN layers being described by Holma and Toskala, WCDMA For UMTS Radio Access For Third Generation Mobile Communications, John Wiley & Sons, Ltd., 2000, which herewith is incorporated herein by reference.

The IP layer offers services to the MAC layer via transport channels which are characterized by how and with what characteristics the data is transferred. The MAC layer in turn offers services to the RLC layer (or more generally to the link control layer) by means of logical channels. The logical channels are characterized through the type of data they transmit. The RLC layer offers services to higher layers via service accessing points which describe how the link control (RLC) layer handles the data packets. On the control plane, the RLC services are used by the RRC layer (Connection Control layer) for signalling transport. On the user plane, the RLC services (link control) are used by higher-layer user plane functions (e.g. speech codec.) The RLC (link control) services are called signalling bearers in the control plane and access bearers in the user plane.

For the access network (media access network in a preferred implementation), the control interfaces between the connection control (RRC) and all lower layer protocols are used by the connection control (RRC) layer to configure characteristics of the lower layer protocols, e.g. transport and logical channels.

In the medium access control MAC layer the logical channels are mapped to transport channels. The MAC layer is also responsible for selecting an appropriate transport format for each transport channel depending on the instantaneous source rates of the respective logical channels. The transport format is selected with respect to the transport format combination set which is defined by the admission control for each connection.

In the (media) access network e.g. the RRC and MAC configuration parameters are adapted to the physical layer speed and to the transport protocol (UDP/IP). Examples of such configuration parameters are RLC PDU size, MAC PDU size, TTI (Transmission Time Interval) and TFS (Transport Format Set). These parameters are considered as configuration data and are configured in RANCN 3 for every type of access bearer.

Each transport channel is configured with a set of transport formats (TFS) which means that TFS is a set of allowed transport formats for a transport channel. A transport format describes how data is transmitted on a transport channel. A transport format contains a number of bits that should be sent in a transport channel for a certain transmission time interval. Different transport format alternatives can be sent over a transport channel and the amount of data that can be sent on each transport channel is restricted by a transport format combination set listing all possible transport format combinations.

Thus, MAC is given a limited set of transport format combinations and each transport format combination is a combination of currently valid transport formats at a given point of time, containing one transport format for each transport channel.

For each transmission time interval, the MAC entities select a transport format combination TFC from the listed set and requests the relevant PDUs from e.g. RLC buffers. The MAC then delivers PDUs from RLC buffers, adding the MAC header and tagging a UDP/IP address. A new transport format combination may also be selected due to the traffic intensity from the Core Network.

The access bearer establishment and release function (for the logical channel DTCH) and the RRC connection handling function (for the logical channel DCCH) provide MAC with the transport format combination set which MAC then uses to schedule the transport block or MAC frame by selecting a transport format combination from the set.

Each set of transport blocks allowed to be sent during a transmission time interval related to one transport channel is carried on to one IP packet transport bearer. The number of transport blocks for each transport channel is variable depending on the load on the link during the relevant transport interval. Every DCH transport channel for one user station 1 will have one UDP/IP address, but the size of the IP packet is variable, e.g. containing any number of transport blocks.

As referred to above, the data transfer services of the MAC layer are provided on logical channels. A set of logical channel types is defined for the different kinds of data transfer services offered by MAC. Each logical channel type is defined by the type of information transferred. A general classification of logical channels is into two different groups, namely control channels, which are used to transfer control plane information, and traffic channels, for transfer of user plane information.

RANCN 3 controls access bearer set up and release between the user station 1 and the external networks 10, 20, 30, 40, 50. Particularly the set up and release of access bearers is in conjunction with RLC/MAC and RRC protocols, or more generally a link control protocol/MAC and connection control protocol.

Through the RANCN 3 there is a dynamic establishment of different types of access bearers, wherein the different access bearers might not have the same bit rates and the same QoS requirements, but are carried on the same WLAN. For each service type there may be several simultaneous sessions and thus a plurality of simultaneous access bearers. RANCN 3 moreover allows for a mixing of circuit switched and packet switched access bearers. This is independent of the physical layer over WLAN and Layer 1 transport technology.

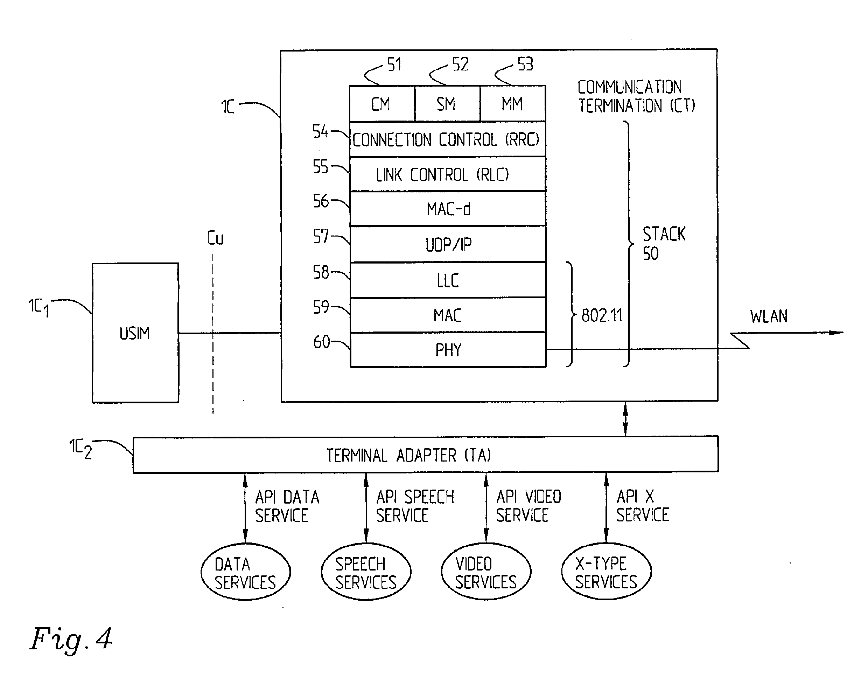

The user station (cf. e.g. Figs. 1,4) comprises, in one implementation, functional entities comprising a communication termination entity 1C, a terminal adapter 1C₂, a set of run applications and a USIM card 1C₁ may be introduced.

It should be clear that this merely relates to one particular implementation. However, in this exemplifying embodiment, communication termination entity 1C includes the functionality and the communication protocols to connect to the access network and one or more core networks. The terminal adapter 1C₂ generally acts as an adaptation between the communication termination 1C and applications, cf. data services, speech services, video services, x type services etc.

The communication termination entity channel 1C in this embodiment includes control management functions CM 51, session management functions SM 52, mobility management functions MM 53 and a protocol stack 50. In one implementation which utilizes the IP and DCH transport channel, the protocol stack 50 includes the following protocols/entities: connection control protocol RRC 54, link control protocol RLC 55, MAC-d protocol 56, UDP IP (Internet Protocol) 57, RLC 58, MAC 59, PHY (Physical Layer), 60 wherein LLC, MAC and PHY 58-60 meet the WLAN specifications IEEE 802.11(b).

The terminal adapter 1C₂ provides communication with the applications (data services, speech services etc. over an application program interface API for data service, an API for speech, an API for video and then API for service type x.

Of course these are merely examples and there may be more or less APIs depending on which services that are wanted.

The RANCN 3 provides a common access interface to establish multi access bearer channels to each user station (not shown in the figure). RANCN 3 advantageously utilizes different types of access bearers dynamically, e.g. establishing and/or allocating as needed an appropriately configured access bearer. Particularly RANCN establishes or allocates the access bearer for example in response to an initiation of a media service at the user station 1. The access bearers are established using layer L2 and layer L3 protocols. The access bearers can also be established to provide a mix of circuit switched access bearers and packet switched access bearers simultaneously with different QoS etc. The access bearers are established dynamically by RANCN 3 using the RRC protocol and the RLC/MAC protocol for the access bearer user plane, or more generally a connection control protocol and a link control/MAC protocol of the access network for the access bearer user plane.

In the embodiment illustrated in Fig. 5, RANCN 3 comprises a connection control unit 130 and a bearer service processing unit 140. The connection control unit 130 establishes access bearers for providing services to the user station and in one embodiment implements the RRC protocol. The bearer service processing unit 140 maps multiple simultaneous access bearers into packets of a transport protocol of the physical link of physical layer L1 and here implements the RLC/MAC protocol of the access network. In one implementation the multiple simultaneous access bearers are mapped into packets of the transport protocol relayed over AP 4 using WLAN.

RANCN comprises a port 150 for the physical layer L1 communication. Port 150 may be external to the RANCN or it may be internal. Further RANCN 3 may include interfaces 121-125 toward CS, PS Core Networks, BRAS edge router, to video on demand network etc. The connection control entity (RRC) 135, link control entity (RLC) 145, MAC protocol entity 146 and L1 protocol entity 151 are used for data services, cf. Fig. 2.

Port 150 is a port to a WLAN access point AP 4. Every user station is connected to an appropriate MAC entity in RANCN 3, typically the MAC entity is included in the bearer service processing unit 140.

In one embodiment RANCN comprises a switched-based node having a switch 134 (cf. Fig. 6). The switch 134 serves to interconnect other constituent elements of RANCN. It may for example be an ATM switch or a packet switch.

The other constituent elements may include one or more extension terminals 135₁-135ₓ. The extension terminals may include the functionality to connect RANCN to plural user stations served by it. The extension terminals may connect RANCN over Iu-CS interface to the circuit switched core network, over Iu-PS to the packet switched core network, to the BRAS edge router, to data services etc. (121A-124A).

Other such constituent elements may include a packet control unit PCU 140, a codec 141, a timing unit 142, data services application unit 124A and a main processor 131. Of course not all these elements are necessary for the functioning of RANCN. Codec 141 is for example useable for CDMA 2000, but not necessary for for example WCDMA.

Generally the functionality and need of constituent elements can be appreciated by the man skilled in the art.

The packet control unit PCU 140 provides e.g. for separation of packet switched data and circuit switched data when it is received from the user station and multiplexes the different data streams from circuit switched and packet switched core networks onto common streams. The PCU may alternatively be located externally of the RANCN.

The functionality of the connection control unit and the bearer service processing unit can be executed or performed by main processor 131, or also by another processor of the RANCN node or by different processors. The functions of these units can be implemented in many different ways using individual hardware circuits, using software functioning in appropriate manner, using application specific integrated circuits and one or more digital signal processors etc.

According to the invention RANCN can be said to be an adapted or modified RNC node of a UTRAN. RANCN can be said to reuse a modified UTRAN RLC/MAC and RRC protocols.

The IP (internet transport protocol) has to be supported in RANCN as a transport protocol for the access bearer channels.

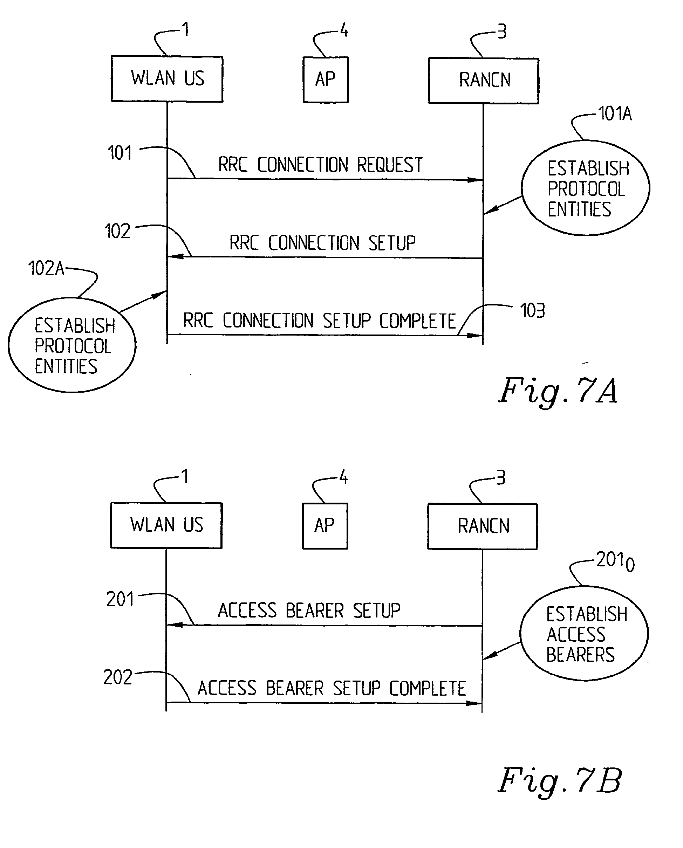

Fig. 7A describes the connection control (RRC) connection setup procedure. After deblocking of the user station 1 and upon initiation of an instance of one of the media applications in the application set, as the first action 101 for setting up a connection control (RRC) connection the user station 1 transmits a connection request message to RANCN 3. The connection request message 101 is sent over the DCCH channel from user station 1 to RANCN 3. The connection request message 101 includes a transport information element or traffic descriptor. In the case of IP transport, the traffic information element can be, e.g., a UDP/IP address. The transport information contains the necessary information to map every type of access bearer to the transport bearers (IP packets) RLC PDU size, MAC PDU size, TB transport blocks size to be sent over a transport bearer during a TTI = Time to Transmission Interval, TTI, etc. For IP there is no reservation of bandwidth. Conventional UTRAN measured information elements are not used or included in the connection request message 101. Moreover, user station (UE) system specific capability, inter-RAT station (UE) radio access capability IE is not used.

RANCN 3 then establishes or allocates protocol entities in layer L1, layer L2, and layer L3 for the application initiated at the user station 1.

For the IP transport protocol, no reservation of bandwidth is done, but the number of simultaneous access bearers (ABs) on a specific connection could be limited at connection control (RRC) connection set up after a capacity check. That is, for the IP transport protocol, the RANCN can check the traffic load on the access towards the user station and check the number of access bearers already established as well as their types and their bit rates, and decides whether to accept new access bearer set up or not.

After receipt of the connection request message 101 and establishment of the protocol entities RANCN 3 transmits a RRC connection setup message 102, to user station 1. The connection setup message 102 is thus sent by the (media) access network to indicate acceptance and establishment of a connection control connection for the user station. Like message 101, the connection setup message 102 is transmitted over the DCCH channel.

The connection setup message 102 includes assignment of control link information, and transport channel information. Unlike the UTRAN RRC connection setup message, the connection setup message 102 of the media access network does not contain radio resource information.

After receipt and processing of the connection setup message 102, the user station 1 uses the information obtained from connection setup message 102 to establish protocol entities 102A which correspond to those established at action 102 at RANCN 3. Then user station 1 transmits a RRC connection setup complete message 103 to RANCN 3. This message serves as the conformation by the user station 1 of the establishment of the connection control (RRC) connection. The connection setup complete message 103 is also sent using a DCCH logical channel.

On receipt of message 103, the RANCN 3 has set up a signalling channel which is analogous to a signalling radio bearer (SRB) in WCDMA. Once the signalling access bearer (SAB) is set up, the first action of the user station 1 (after establishing the connection for the first time after a period of being switched off (off state)) is to perform a location update signalling procedure. This is a signalling sequence between the user station 1 and the core network on the Non Access Stratum level. By this action, the user station 1 becomes registered as being active in the service providers network. The user station 1 is then considered active (analoguous to being in state cell_DCH connected in WCDMA RRC protocol definition). This describes just one possible embodiment, there being different or parallel solutions which use the common channel concepts and PCH, FACH and RACH channel concepts. The user station 1 is then connected and is ready to accept terminating calls and make originating calls, in the case of being connected to a WCDMA core network. In other examples of service providing networks this takes the form of the user station 1 being able to communicate, request and receive, terminate media and data services by using non access stratum messages embodied in the payload of the connection control (RRC) direct transfer messages.

With reference to Fig. 7B an access bearer setup procedure will be described. Once the user station is connected to RANCN 3, the access bearer (AB) is allocated or established. The skilled man will understand the various considerations involved in the RANCN 3 determining which access bearer to assign. For example, considerations and/or criteria such as those employed in UTRAN can be utilized.

After establishing the access bearer, RANCN 3 sends a access bearer setup message 201 to user station 1 for the purpose of establishing the access bearer(s). The access bearer setup message 201 is transmitted over the DCCH logical channel. The type of access bearer is included in the access bearer setup message 201, and the message 201 includes the transport information element (e.g. UDP/IP address for IP transport). The access bearer setup message 201 also contains an identification of the access bearer.

The access bearer setup message 201 may resemble the comparably named UTRAN message known as the radio bearer setup message.

Upon receipt of the access bearer setup message 201 the user station 1 is advised of the pertinent access bearer information. Then, user station 1 acknowledges receipt by transmitting an access bearer set up complete message 202. The access bearer setup complete message 202 is thus sent by user station 1 to confirm the establishment of the radio bearer. It is sent over the DCCH logical channel. As in previously described connection control messages, the PhyCH information element can be appropriated to refer to transport channels (e.g. to carry the UDP/IP address of the transport channels).

After the access bearer to be utilized by an application service has been established in the manner generally described above, data packets belonging to the media service of the application can be transmitted from and to user station 1 over WLAN. The further description of protocols affirms the processing of the data packets.

Fig. 8 is a signalling diagram illustrating the signalling between the user station, WLAN access point, RANCN and, in this case, a 3G network.

It is then supposed that the WLAN capable user station sends a WLAN connection request to the WLAN access point, 301. This means that a WLAN connection will be established. The access point AP then returns an acknowledgment, 302, of the connection to the user station. The user station then sends an initiate IP session request, 303, to RANCN, where UDP/IP is established and an acknowledgment 304 is returned to the user station. Subsequently the user station sends an RRC connection request, 305, to RANCN, as also explained in Fig. 7A in a more detailed manner. When RANCN has established RRC/RLC/MAC, a message to that effect is sent to the user station, 306. A message is then also sent to the 3G network and RANAP/SCCP is established. Between the user station and the 3G network non-access stratum messages (NAS) are sent, here indicated through numeral 308. Such messages may comprise location update, access bearer setup etc., cf. for example Fig. 7B. The user station then sends a (RANAP) location registration request, 309, to the 3G network which returns a (RANAP) location update accept, 310, to the user station. Subsequently the user station uses RRC sending a CM service request to RANCN, 311. RANCN, over RANAP, sends an initial UE (User Equipment) message, 312, to the 3G network (i.e. a CM service request).

The 3G network then sends a CM service accept, i.e. a RANAP direct transfer, 313, to RANCN, which uses RRC to send a CM service accept to the user station, 314. The user station uses RRC to send an uplink direct transfer (setup) request 315 to RANCN, and further to the 3G network using RANAP, 316.

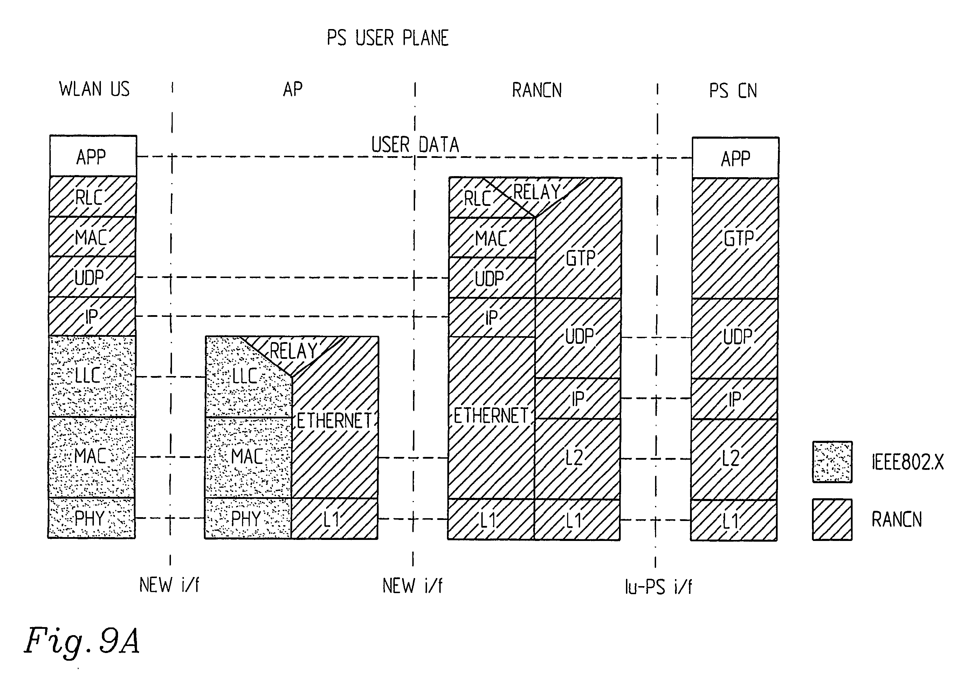

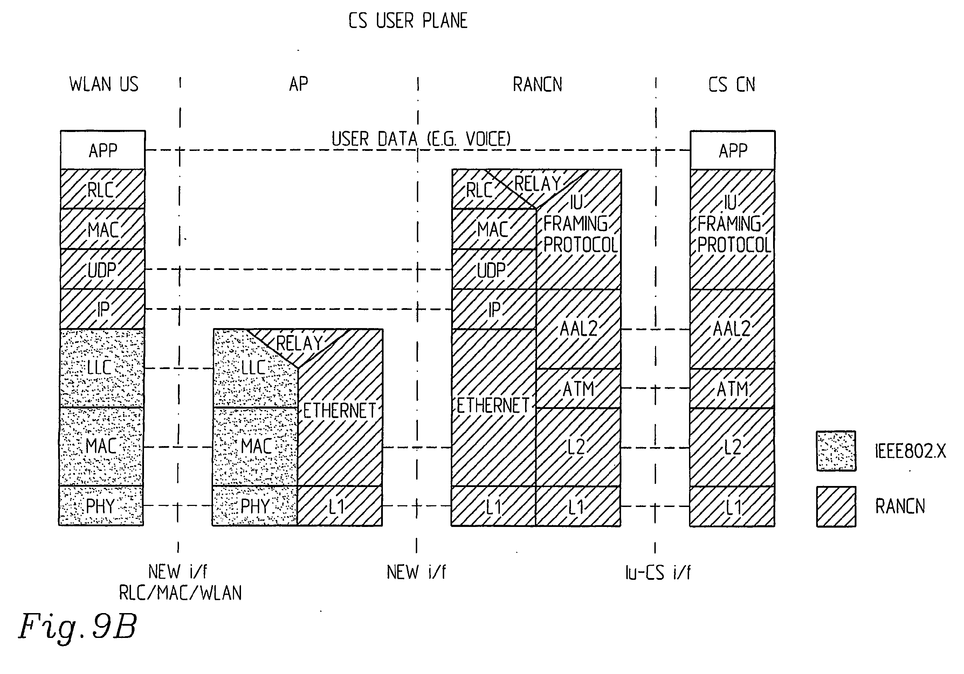

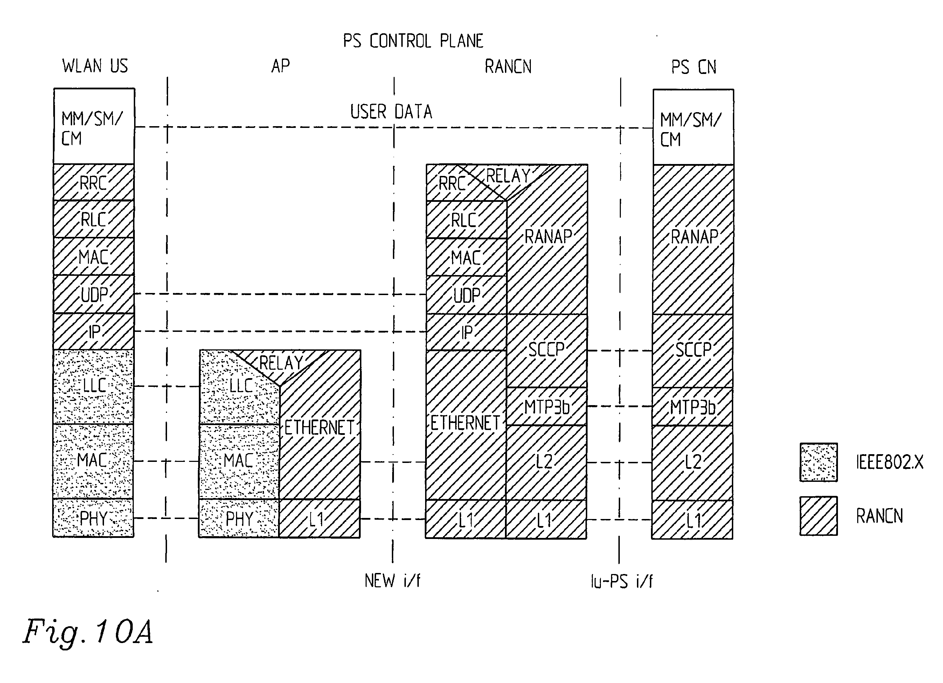

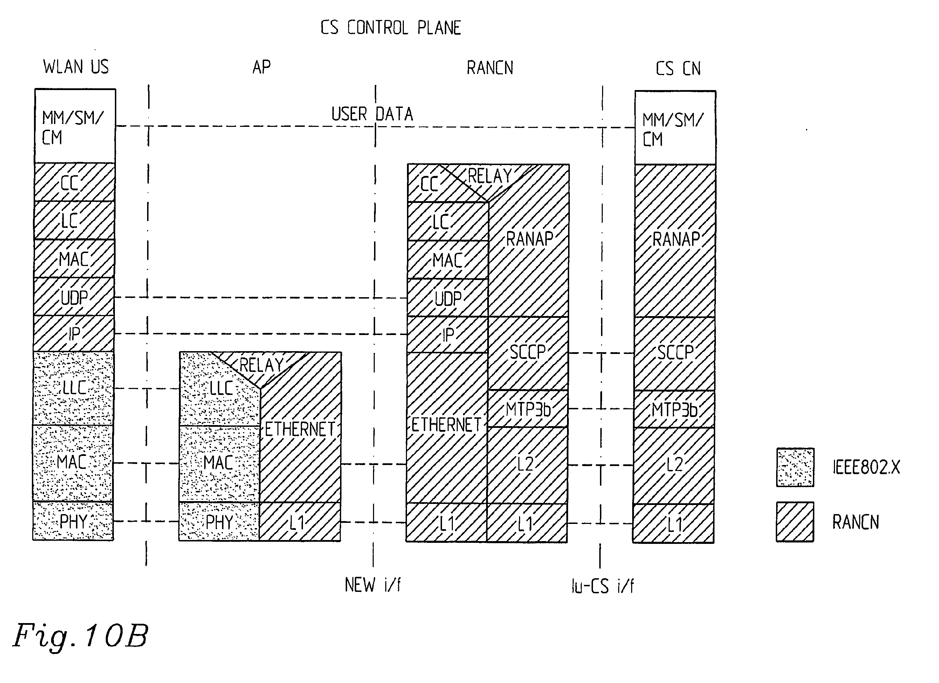

Figs. 9A, 9B, 10A, 10B show protocol stacks for the user plane for the packet switched and the circuit switched cases respectively (Figs. 9A, 9B) and the control plane protocols for the packet switched and circuit switched cases (Figs. 10A, 10B respectively). Thus, Fig. 9A illustrates the protocol stacks of a WLAN capable user station, an access point AP, RANCN and a packet switched core network, PS CN and the interfaces there-between indicated. APP in the figure relates to applications for the transportation of user data. The grain shaded protocols are the WLAN protocols whereas upward diagonal-shaded protocols are the protocols terminating on the RANCN.

As can be seen the Iu-PS (packet switched) interface is used between PS CN and RANCN, whereas new interfaces are introduced between the WLAN capable user station and the access point and between the access point and RANCN respectively. In this implementation RRC, RLC/MAC are run over UDP/IP over the WLAN protocols as specified in IEEE 802.x (11b). The user plane information is segmented/concatenated over the RLC/MAC protocols. The role of the RLC protocol is to communicate or concatenate and prioritize the information from the higher layers whereas the role of MAC is to map the RLC frames to the transport channel MAC frames which are encapsulated into UDP/IP frames. This will also be further discussed below. However, between the user station and the WLAN access point, the WLAN interface and protocols are used according to IEEE 802.x. It consists of the radio physical layer, LLC and the MAC layer, cf. IEEE 802.11b. RRC, RLC/MAC and UDP/IP are according to the present invention run over the WLAN protocols.

Fig. 9B is a figure similar to Fig. 9A with the difference that the core network is circuit switched. The interface between RANCN and CS CN is thus the Iu-CS interface. The user data may e.g. be voice and/or Unrestricted Digital Information (UDI) or streamed data.

In Fig. 10A the protocols for the packet switched control plane between a WLAN capable user station and a packet switched network are illustrated. The user station needs to communicate with the PS CN transparently through the RANCN, as in UMTS with no substantial modification. The Call Control (CC), Mobility Management (MM), Session Management (SM) are used. This is done through a communication channel. The functionality of RRC is to establish the communication channel between the WLAN capable user station and the RANCN, and the purpose of RLC is to segmentate or concatenate and prioritize the information from the higher layers. MAC serves the purpose to map the RLC frames to the transport channel MAC frames which are encapsulated into UDP/IP frames etc. These frames are then run over WLAN between the user station and the access point. The access point simply relays these frames and then run them over the Ethernet/physical link between the access point and the RANCN. It does not necessarily have to be Ethernet, it could just as well be ATM or any other technology. As in Fig. 9B, for the user plane, the concept is the same with the difference that RRC is not used as compared to the user control plane. The user plane information is segmented/concatenated over the RLC/MAC protocols etc.

In the following the user plane protocol operation will be briefly described. In the user plane, in the (media) access network according to the invention, Iu UP, RLC and MAC (e.g. MAC-d) are used substantially in the same manner as in UTRAN. A transmission time interval (TTI) is assigned to every DCH established for MAC policing. In the transmitter TTI timeouts are aligned, i.e. all TTI timeouts coincide for every largest TTI interval. After the TFCS scheduling algorithm has been run, transport blocks are framed into IP packets and sent towards the receiver. No TTI is defined for the receiver, i.e. blocks contained in IP packets are passed at once towards higher layers.

MAC size (TB transport block) and TTI length are access bearer and transport bandwidth specific. They are configurable depending on the physical layer speed. If for example there is to be a higher bandwidth transport, the MAC size (TB) for a certain access bearer can be set larger if there is a possibility to send more bits during the same time period. For the IP transport protocol no bandwidth reservation is needed but the number of simultaneous access bearers on a specific connection could be limited at access bearer set up after a capacity check in RANCN.

In the following the operation of a generic link control entity, e.g. the RLC protocol, will briefly discussed. The RANCN comprises a bearer service processing unit with a generic link control entity. The RLC (link control) entity has a transmitting side and a receiving side. The transmitting side has, among others, a segmentation/concatenation unit, a transmission buffer and a PDU formation unit. The receiving side has among others a receiving buffer and a reassembly unit. In view of the respective units, the RLC layer architecture provides segmentation and retransmission services for user as well as for control data.

On the transmitting side of an RLC entity in RANCN, data packets received (RLC SDU) from higher layers via SAP are segmented and/or concatenated by a segmentation/concatenation unit to payload units of fixed length. The payload unit length is a semi static value that is decided in the access bearer set up procedure and can only be changed through an access bearer reconfiguration procedure. For concatenation purposes, bits carrying information on the length and extension are inserted into the beginning of the last payload unit where data from an SDU is included. If several SDUs fit into one payload unit, they are concatenated and the appropriate length indicators are inserted at the beginning of the payload unit. The payload units are then placed in a transmission buffer which also, in this particular embodiment, handles retransmission management. In case of a higher bit rate speed, the RLC can work in transparent mode and/or in an unacknowledged mode. Mode as well as RLC PDU size are configurable. In the transparent mode no protocol overhead is added to the higher layer data. An erroneous LC PDU can be discarded or marked erroneous. Transmission with limited segmentation reassambly capability can be accomplished. An RLC PDU may be constructed by taking one payload unit from the transmission buffer. For the transparent mode, a RLC PDU header contains the RLC PDU SN sequence number (12 bits) and optionally a length indicator used for the concatenation purposes.

In the unacknowledged mode no retransmission protocol is in use. Received erroneous data is either marked or discarded depending on configuration. The RLC SDU that is not transmitted within a specified time period is simply removed from the transmission buffer. The protocol overhead is three octets and the size of the RLC PDU could be larger. The size of the RLC PDU can be adjusted based on the layer L1 transmission speed.

Below the MAC layer protocol will be briefly discussed. The MAC layer with its MAC-d protocol entities performs a functionality as in the case when the physical layer is the WCDMA radio interface. In the MAC layer the logical channels from the RLC (link control) layer are mapped to the transport channel MAC frames (e.g. to MAC PDUs). In the layer 1 protocol the transport channels MAC frames are encapsulated into UDP/IP packets. There is a mapping between different layers for different access bearers when the physical layer is an IP layer. The RLC sub- layer may comprise a number of access bearers. Every access bearer or MAC frame may have two UDP/IP addresses and the IP transport protocol is used, i.e. one UDP/IP address for the user station and one UDP/IP address for RANCN.

The MAC header is a bit string with a length which not necessarily is a multiple of 8 bits. The MAC protocol might be simplified by reducing its four headers to one header. Of the traditional four headers, the TCTF header, the C/T header and the UE-Id type header are not used in the simplification but only the UE-Id header is used, particularly having a maximum of 16 bits.

In the transport network, i.e. in the lowest layer, the MAC frames are encapsulated as in the WCDMA into appropriate packets/frames. Particularly the MAC frames are encapsulated into IP packets. Thus, the MAC sublayer has to be adapted to interwork with the UDP/IP layer but this should be known to the man skilled in the art how such adaptations are performed.

The basic idea of the present application is to run the RRC, RLC/MAC layer over the UDP/IP layer. Any transport technology between the access point and the RANCN could actually be used, for example Ethernet or ATM. The role of the access point is simply to relay the RRC, RLC/MAC/UDP/IP by means of the transport technology used between the access point and the RANCN. Only the UDP/IP addresses are relevant for the MAC PDUs. Such an UDP/IP address represents the address of the user station with a WLAN interface. This is clearly shown in the protocol diagrams, Figs. 9A, 9B, 10A, 10B.

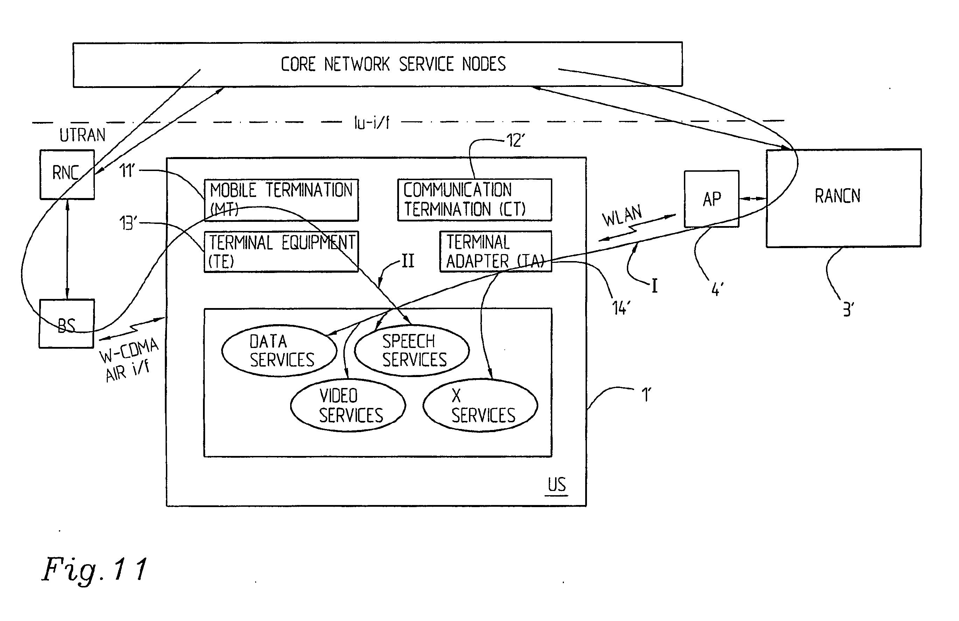

Fig. 11 shows one example of a user station 1' which can obtain media services either alternatively or simultaneously both over the (media) access network with RANCN 3' as discussed above (path I) and over a conventional radio access network with a RNC and a base station (path II). Here a conventional radio access network UTRAN is used. The UTRAN structure and operation should be known to the man skilled in the art. The core network service nodes are in the figure connected to a UMTS terrestrial radio access network UTRAN, over the Iu interface. The UTRAN, as is known, includes one or more RNCs and one or more BSs although here only one RNC and one BS are illustrated. Of course generally several base stations are served by each RNC etc. The user station 1' selectively communicates with one or more cells or one or more base stations over a radio interface to the core network. Particularly the user station 1' comprises a mobile termination unit MT 11' which participates in any radio transmission of media services provided through the radio access network.

The user station 1' can participate in certain media services provided via for examples UTRAN and at the same time or at any other time participate in media services provided over WLAN as discussed earlier in the application (path I). The arrow path I illustrates that the user station 1¹ receives a first media service (a data service) via the media access network, i.e. over WLAN, and arrow path II illustrates that the user station 1¹ receives a second media service, for example a speech service, over UTRAN. Bearers for the respective services are set up by the respective networks.

The radio access network and the WLAN can be operated by the same operator or by different operators.

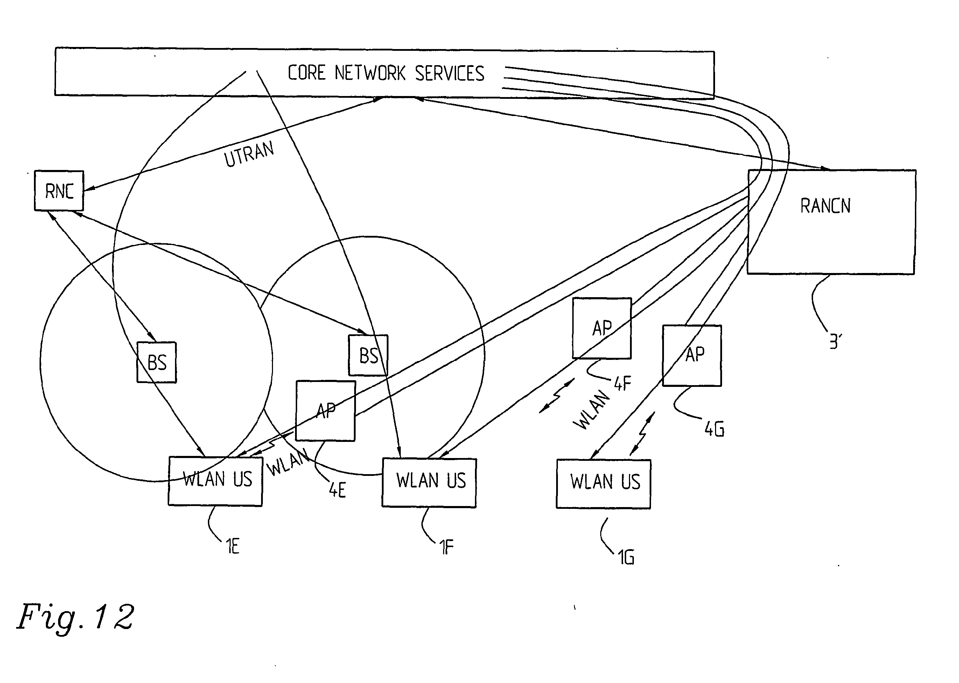

Fig. 12 shows an example wherein a network operator provides media services over different interfaces, e.g. over the conventional air interface on one hand and over WLAN on the other hand, to the user station 1'. Here several user stations 1E, 1F, 1G are illustrated in the figure. The user stations 1E, 1F, 1G are connected to RANCN over respective access points AP 4E, 4F, 4G respectively and over base stations (only user stations 1E, 1F) and RNC over UTRAN. The implementations of Figs. 11, 12 are merely illustrated for exemplifying reasons; the user stations could of course be connected only over WLAN according to the inventive concept.

Among others it is an advantage of the present invention that a WLAN can offer not only best effort services, but also real time services and conversational services like speech and video.

Another advantage is that it integrates indoor and public WLAN hotspots with e.g. 3G networks.

Another advantage is that a WLAN user can access e.g. UMTS services over a WLAN radio interface, e.g. voice, video with predictable and secured QoS.

Yet another advantage is that e.g. UMTS (or any other service providing network) operators are given the opportunity to provide services, e.g. 3G services, over a WLAN radio interface by reusing the infrastructure of e.g. the UMTS.

It should be clear that the invention, of course, is not limited to the particularly illustrated embodiments, but that it can be varied in a number of ways within in the scope of the appended claims.

## Claims

1. A radio network control node for providing a WLAN supporting user station with access to one or more service providing networks,
**characterized in**
**that** it comprises a radio access network control node (RANCN) (3) adapted to be connected to access points (2A,2B;4) of a WLAN and that it is adapted to act as a gateway node between the WLAN access points and the one or more service providing networks, the radio access network control node (3) comprising connection processing means arranged to adapt control and user transport protocols of the service providing network to WLAN transport protocols and including a conversion control unit (130) adapted to establish access bearers for providing services to the user station, and a bearer service processing unit (140) adapted to map or convert service network access bearers into transport protocol packets of the WLAN, and reuse a set of service network transport protocols for WLAN communication, and to tunnel the adapted, reused, protocols, using IP, over a WLAN air interface, through a said WLAN access point connected to the radio access network control node (3).

2. A radio network control node according to claim 1,
**characterized in**
**that** the reused protocols are tunneled transparently over the WLAN air interface.

3. A radio network control node according to any one of claims 1-2,
**characterized in**
**that** it is adapted to support multiple access bearer connections of different bit rates, types, bandwidth and/or QoS.

4. A radio network control node according to claim 3,
**characterized in**
**that** it is adapted to establishing one or more access bearers simultaneously wherein the access bearers are configured for different types of media services and carry connections for a plurality of services of its associated type.

5. A radio network control node according to any one of the preceding claims,
**characterized in**
**that** it is adapted to provide access to various services over access bearers comprising circuit switched as well as packet switched bearers.

6. A radio network control node according to any one of the preceding claims,
**characterized in**
**that** it is adapted to provide access to a service providing network being a 3G network.

7. A radio network control node according to any one of the preceding network,
**characterized in**
**that** it is adapted to reuse the W-CDMA L3 RRC, L2 RLC/MAC protocols.

8. A radio network control node according to any one of the preceding claims,
**characterized in**
**that** it is adapted to provide a user station comprising a user equipment comprising a PC, Laptop or a telephone with access to UMTS/CDMA services over WLAN.

9. A radio network control node according to any one of the preceding claims,
**characterized in**
**that** with the adapted reused protocols multiple access bearers are set up simultaneously.

10. A radio network control node according to any one of the preceding claims,
**characterized in**
**that** it is adapted to provide access to a service providing network being UMTS and that it is adapted to reuse the 3GPP RRC and RLC/MAC protocols modified to provide access to the UMTS core network via the Iu-interface.

11. A radio network control node according to any one of the preceding claims,
**characterized in**
**that** it is adapted to control set-up and release of access bearers by reuse of the RLC/MAC and RRC protocols run over UDP/IP over WLAN transport protocols IEEE 802.X between the WLAN access point and the user station, and over any transport protocol between RANCN and the WLAN access point.

12. A radio network control node according to any one of the preceding claims,
**characterized in**
**that** it is adapted to act as a gateway node between access points (2A, 2B;4) of a WLAN and the Iu-interface of UMTS, an access point (2A,2B;4) relaying RRC, RLC/MAC over any transport protocol used between the access point (2A,2B;4) and the RANCN (3) .

13. A radio network control node according to any one of the preceding claims,
**characterized in**
**that** it is adapted to use UDP/IP and WLAN, IEEE 802.11, for the RRC/RLC/MAC between service network and RANCN (3), and RANCN (3) and user station (1A,1B) respectively.

14. A radio network control node according to any one of the preceding claims,
**characterized in**
**that** it is adapted to dynamically establish a number of access bearers to a user station (1A,1B) connected to the radio access network control node (3).

15. A method for providing a WLAN supporting user station with access to services of a service providing network,
**characterized in**
**that** it comprises the steps of:
- establishing a WLAN connection between the user station and a WLAN access point (2A,2B;4);
- initiating/establishing an IP session between the user station and a radio access network control node (3) acting as a gateway between the WLAN access point and the service providing network;
- adapting, in a connection processing means of the radio access network control node (3), control and user plane transport protocols of the service providing network to WLAN transport protocols, comprising;
- establishing, in a connection control unit (130) of the connection processing means, access bearers for providing services to the user station;
- mapping or converting service network access bearers into WLAN transport protocol packets in a bearer service processing unit (140) of the connection processing means; and,
- tunneling, using IP, the adapted, reused, transport protocols of the service providing network through the WLAN access point (2A,2B;4) connected to the radio access network control node (3).

16. A method according to claim 15,
**characterized in**
**that** it comprises the step of:
- providing the user station dynamically with access to various services over circuit and/or packet switched bearers of variable bandwidth, type and/or QoS.

17. A method according to claim 16,
**characterized in**
**that** it comprises the step of:
- setting up multiple access bearers simultaneously.

18. A method according to any one of claims 15-17,
**characterized in**
**that** service providing network is a 3GPP Network, the adapted, reused, protocols being the 3GPP L2 RLC/MAC and L3 RRC protocols.

19. A method according to any one of claims 15-18,
**characterized in**
**that** the service providing network is UMTS and in that the adapted, reused, RRC, RLC/MAC protocols are used to provide access to the UMTS core network via the Iu-interface.

20. A method according to any one of claims 18-19,
**characterized in**
**that** it comprises the step of:
- controlling in the RANCN, set-up and release of access bearers by adapting and reusing the RRC,RLC/MAC and protocols such that they can run over UDP/IP over WLAN IEEE 802.X between the user station and the WLAN access point.

21. A method according to any one of claims 15-20,
**characterized in**
**that** it comprises the step of:
- dynamically establishing a number of access bearers to the user station connected to the RANCN.

## Patentansprüche

1. Funknetzwerksteuerknoten zum Bereitstellen eines Zugangs zu einem oder mehreren Dienstbereitstellungsnetzwerken für eine WLAN unterstützende Benutzerstation,
**dadurch gekennzeichnet,**
**dass** er einen Funkzugangsnetzwerk-Steuerknoten (RANCN) (3) umfasst, der angepasst ist, um mit Zugangspunkten (2A, 2B; 4) eines WLAN verbunden zu werden, und der angepasst ist, um als ein Gatewayknoten zwischen den WLAN-Zugangspunkten und dem einen oder den mehreren Dienstbereitstellungsnetzwerken zu fungieren, wobei der Funkzugangsnetzwerk-Steuerknoten (3) Verbindungsverarbeitungsmittel umfasst, die angeordnet sind, um Steuerungs- und Benutzer-Transportprotokolle des Dienstbereitstellungsnetzwerks WLAN-Transport-Protokollen anzupassen, und enthaltend eine Umwandlungssteuereinheit (130), die angepasst ist, um Zugangsträger zum Bereitstellen von Diensten für die Benutzerstation einzurichten, und eine Trägerdienst-Verarbeitungseinheit (140), die angepasst ist, um Dienstnetzwerk-Zugangsträger auf bzw. in Transportprotokollpakete des WLAN abzubilden oder umzuwandeln und einen Satz von Dienstnetzwerk-Transportprotokollen für WLAN-Kommunikation wiederzuverwenden und um die angepassten, wiederverwendeten, Protokolle unter Verwendung von IP über eine WLAN-Luftschnittstelle durch einen der mit dem Funkzugangsnetzwerk-Steuerknoten (3) verbundenen WLAN-Zugangspunkte zu tunneln.

2. Funknetzwerksteuerknoten nach Anspruch 1,
**dadurch gekennzeichnet,**
**dass** die wiederverwendeten Protokolle transparent über die WLAN-Luftschnittstelle getunnelt werden.

3. Funknetzwerksteuerknoten nach einem der Ansprüche 1-2,
**dadurch gekennzeichnet,**
**dass** er angepasst ist, um mehrere Zugangsträger-Verbindungen verschiedener Bitraten, Typen, Bandbreiten und/oder QoS zu unterstützen.

4. Funknetzwerksteuerknoten nach Anspruch 3,
**dadurch gekennzeichnet,**
**dass** er angepasst ist, um einen oder mehrere Zugangsträger gleichzeitig einzurichten, wobei die Zugangsträger für verschiedene Typen von Mediendiensten konfiguriert sind und Verbindungen für eine Vielzahl von Diensten ihres assoziierten Typs tragen.

5. Funknetzwerksteuerknoten nach einem der vorstehenden Ansprüche,
**dadurch gekennzeichnet,**
**dass** er angepasst ist, um Zugang zu verschiedenen Diensten über Zugangsträger, die sowohl leitungsvermittelte als auch paketvermittelte Träger umfassen, bereitzustellen.

6. Funknetzwerksteuerknoten nach einem der vorstehenden Ansprüche,
**dadurch gekennzeichnet,**
**dass** er angepasst ist, um Zugang zu einem Dienstbereitstellungsnetzwerk, das ein 3G-Netzwerk ist, bereitzustellen.

7. Funknetzwerksteuerknoten nach einem der vorstehenden Ansprüche,
**dadurch gekennzeichnet,**
**dass** er angepasst ist, um die Protokolle W-CDMA L3 RRC, L2 RLC/MAC wiederzuverwenden.

8. Funknetzwerksteuerknoten nach einem der vorstehenden Ansprüche,
**dadurch gekennzeichnet,**
**dass** er angepasst ist, um einer Benutzerstation, die eine Benutzerausrüstung umfasst, umfassend einen PC, einen Laptop oder ein Telefon einen Zugang zu UMTS/CDMA-Diensten über WLAN bereitzustellen.

9. Funknetzwerksteuerknoten nach einem der vorstehenden Ansprüche,
**dadurch gekennzeichnet,**
**dass** mit den angepassten wiederverwendeten Protokollen mehrere Zugangsträger gleichzeitig aufgebaut werden.

10. Funknetzwerksteuerknoten nach einem der vorstehenden Ansprüche,
**dadurch gekennzeichnet,**
**dass** er angepasst ist, um Zugang zu einem Dienstbereitstellungsnetzwerk, das UMTS ist, bereitzustellen, und dass er angepasst ist, um die Protokolle 3GPP RRC und RLC/MAC, modifiziert zum Bereitstellen von Zugang zu dem UMTS-Kernnetzwerk über die Iu-Schnittstelle, wiederzuverwenden.

11. Funknetzwerksteuerknoten nach einem der vorstehenden Ansprüche,
**dadurch gekennzeichnet,**
**dass** er angepasst ist, um Aufbau und Freigabe von Zugangsträgern durch Wiederverwendung der Protokolle RLC/MAC und RRC, verlaufend über UDP/IP über WLAN-Transportprotokolle IEEE 802.X zwischen dem WLAN-Zugangspunkt und der Benutzerstation und über beliebige Transportprotokolle zwischen RANCN und dem WLAN-Zugangspunkt, zu steuern.

12. Funknetzwerksteuerknoten nach einem der vorstehenden Ansprüche,
**dadurch gekennzeichnet,**
**dass** er angepasst ist, um als ein Gatewayknoten zwischen Zugangspunkten (2A, 2B; 4) eines WLAN und der Iu-Schnittstelle von UMTS, einem Zugangspunkt (2A, 2B; 4), der RRC, RLC/MAC über ein Transportprotokoll weiterleitet, verwendet zwischen dem Zugangspunkt (2A, 2B; 4) und dem RANCN (3), zu fungieren.

13. Funknetzwerksteuerknoten nach einem der vorstehenden Ansprüche,
**dadurch gekennzeichnet,**
**dass** er angepasst ist, um UDP/IP und WLAN, IEEE 802.11, für den RRC/RLC/MAC zwischen Dienstnetzwerk und RANCN (3) bzw. RANCN (3) und Benutzerstation (1A, 1B) zu verwenden.

14. Funknetzwerksteuerknoten nach einem der vorstehenden Ansprüche,
**dadurch gekennzeichnet,**
**dass** er angepasst ist, um eine Zahl von Zugangsträgern zu einer mit dem Funkzugangsnetzwerk-Steuerknoten (3) verbundenen Benutzerstation (1A, 1B) dynamisch einzurichten.

15. Verfahren zum Bereitstellen eines Zugangs zu Diensten eines Dienstbereitstellungsnetzwerks für eine WLAN unterstützende Benutzerstation,
**dadurch gekennzeichnet,**
**dass** es die folgenden Schritte umfasst:
- Einrichten einer WLAN-Verbindung zwischen der Benutzerstation und einem WLAN-Zugangspunkt (2A, 2B; 4);
- Einleiten/Einrichten einer IP-Sitzung zwischen der Benutzerstation und einem Funkzugangsnetzwerk-Steuerknoten (3), der als ein Gateway zwischen dem WLAN-Zugangspunkt und dem Dienstbereitstellungsnetzwerk fungiert;
- Anpassen, in einem Verbindungsverarbeitungsmittel des Funkzugangsnetzwerk-Steuerknotens (3), von Steuerungs- und Benutzerebenen-Transportprotokollen des Dienstbereitstellungsnetzwerks an WLAN-Transportprotokolle, umfassend:
- Einrichten, in einer Verbindungsteuereinheit (130) des Verbindungsverarbeitungsmittels, von Zugangsträgern zum Bereitstellen von Diensten für die Benutzerstation;
- Abbilden oder Umwandeln von Dienstnetzwerk-Zugangsträgern auf bzw. in WLAN-Transportprotokollpakete in einer Trägerdienst-Verarbeitungseinheit (140) des Verbindungsverarbeitungsmittels; und
- Tunneln, unter Verwendung von IP, der angepassten, wiederverwendeten, Transportprotokolle des Dienstbereitstellungsnetzwerks durch den mit dem Funkzugangsnetzwerk-Steuerknoten (3) verbundenen WLAN-Zugangspunkt (2A, 2B; 4).

16. Verfahren nach Anspruch 15,
**dadurch gekennzeichnet,**
**dass** es den folgenden Schritt umfasst:
- dynamisches Bereitstellen eines Zugangs zu verschiedenen Diensten über leitungs- und/oder paketvermittelte Träger verschiedener Bandbreiten, Typen und/oder QoS für die Benutzerstation.

17. Verfahren nach Anspruch 16,
**dadurch gekennzeichnet,**
**dass** es den folgenden Schritt umfasst:
- gleichzeitiges Aufbauen mehrerer Zugangsträger.

18. Verfahren nach einem der Ansprüche 15-17,
**dadurch gekennzeichnet,**
**dass** das Dienstbereitstellungsnetzwerk ein 3GPP-Netzwerk ist, wobei die angepassten, wiederverwendeten Protokolle die Protokolle 3GPP L2 RLC/MAC und L3 RRC sind.

19. Verfahren nach einem der Ansprüche 15-18,
**dadurch gekennzeichnet,**
**dass** das Dienstbereitstellungsnetzwerk UMTS ist und dass die angepassten, wiederverwendeten Protokolle RRC, RLC/MAC verwendet werden, um Zugang zu dem UMTS-Kernnetzwerk über die Iu-Schnittstelle bereitzustellen.

20. Verfahren nach einem der Ansprüche 18-19,
**dadurch gekennzeichnet,**
**dass** es den folgenden Schritt umfasst:
- Steuern in dem RANCN von Aufbau und Freigabe von Zugangsträger durch Anpassen und Wiederverwenden der Protokolle RRC, RLC/MAC derart, dass sie über UDP/IP über WLAN IEEE 802.X zwischen der Benutzerstation und dem WLAN-Zugangspunkt verlaufen können.

21. Verfahren nach einem der Ansprüche 15-20,
**dadurch gekennzeichnet,**
**dass** es den folgenden Schritt umfasst:
- dynamisches Einrichten einer Zahl von Zugangsträgern zu der mit dem RANCN verbundenen Benutzerstation.

## Revendications

1. Noeud de commande de réseau radio destiné à fournir, à une station d'utilisateur prenant en charge un réseau WLAN, l'accès à un ou plusieurs réseaux fournisseurs de services,
**caractérisé en ce que**
il comprend un noeud de commande de réseau d'accès radio (RANCN) (3) apte à être connecté à des points d'accès (2A, 2B ; 4) d'un réseau WLAN, et **en ce qu'**il est apte à agir en qualité de noeud de passerelle entre les points d'accès de réseau WLAN et ledit un ou lesdits plusieurs réseaux fournisseurs de services, le noeud de commande de réseau d'accès radio (3) comprenant des moyens de traitement de connexion agencés de manière à adapter des protocoles de transport de plan de commande et de plan utilisateur du réseau fournisseur de services à des protocoles de transport de réseau WLAN, et incluant une unité de commande de conversion (130) apte à établir des porteuses d'accès en vue de fournir des services à la station d'utilisateur, et une unité de traitement de services de porteuse (140) apte à mettre en concordance ou à convertir des porteuses d'accès de réseau de service dans / en des paquets de protocoles de transport du réseau WLAN, et à réutiliser un ensemble de protocoles de transport de réseau de service pour la communication de réseau WLAN, et à tunnelliser les protocoles adaptés et réutilisés, en utilisant le protocole IP, sur une interface radio de réseau WLAN, à travers un dit point d'accès de réseau WLAN connecté au noeud de commande de réseau d'accès radio (3).

2. Noeud de commande de réseau radio selon la revendication 1,
**caractérisé en ce que**
les protocoles réutilisés sont tunnellisés de manière transparente sur l'interface radio de réseau WLAN.

3. Noeud de commande de réseau radio selon l'une quelconque des revendications 1 à 2,
**caractérisé en ce que**
il est apte à prendre en charge de multiples connexions de porteuses d'accès de différents débits binaires, types, de différentes bandes passantes et/ou qualités de service.

4. Noeud de commande de réseau radio selon la revendication 3,
**caractérisé en ce que**
il est apte à établir une ou plusieurs porteuses d'accès simultanément, dans lesquelles les porteuses d'accès sont configurées pour différents types de services multimédias et transportent des connexions pour une pluralité de services de leur type correspondant.

5. Noeud de commande de réseau radio selon l'une quelconque des revendications précédentes,
**caractérisé en ce que**
il est apte à fournir un accès à divers services sur des porteuses d'accès comprenant des porteuses à commutation de circuits ainsi que des porteuses à commutation de paquets.

6. Noeud de commande de réseau radio selon l'une quelconque des revendications précédentes,
**caractérisé en ce que**
il est apte à fournir un accès à un réseau fournisseur de services lequel est un réseau 3G.

7. Noeud de commande de réseau radio selon l'une quelconque des revendications précédentes,
**caractérisé en ce que**
il est apte à réutiliser les protocoles RRC L3 W-CDMA et RLC/MAC L2.

8. Noeud de commande de réseau radio selon l'une quelconque des revendications précédentes,
**caractérisé en ce que**
il est apte à fournir, à une station d'utilisateur comprenant un équipement d'utilisateur, comprenant un ordinateur personnel, un ordinateur portable ou un téléphone, un accès à des services UMTS / CDMA sur réseau WLAN.

9. Noeud de commande de réseau radio selon l'une quelconque des revendications précédentes,
**caractérisé en ce que**,
avec les protocoles adaptés réutilisés, plusieurs porteuses d'accès sont établies simultanément.

10. Noeud de commande de réseau radio selon l'une quelconque des revendications précédentes,
**caractérisé en ce que**
il est apte à fournir un accès à un réseau fournisseur de services lequel est un système UMTS, et **en ce qu'**il est apte à réutiliser les protocoles RRC et RLC / MAC 3GPP modifiés en vue de fournir un accès au réseau fédérateur de système UMTS par le biais de l'interface Iu.

11. Noeud de commande de réseau radio selon l'une quelconque des revendications précédentes,
**caractérisé en ce que**
il est apte à commander l'établissement et la libération de porteuses d'accès, par la réutilisation des protocoles RLC / MAC et RRC exécutés sur les protocoles IEEE 802.X de transport UDP / IP sur réseau WLAN entre le point d'accès de réseau WLAN et la station d'utilisateur, et sur tout protocole de transport entre le réseau fédérateur RANCN et le point d'accès de réseau WLAN.

12. Noeud de commande de réseau radio selon l'une quelconque des revendications précédentes,
**caractérisé en ce que**
il est apte à agir en qualité de noeud de passerelle entre des points d'accès (2A, 2B ; 4) d'un réseau WLAN et l'interface Iu du système UMTS, un point d'accès (2A, 2B , 4) relayant les protocoles RRC et RLC / MAC sur tout protocole de transport utilisé entre le point d'accès (2A, 2B ; 4) et le réseau RANCN (3).

13. Noeud de commande de réseau radio selon l'une quelconque des revendications précédentes,
**caractérisé en ce que**
il est apte à utiliser les protocoles UDP / IP et le réseau WLAN, IEEE 802.11, pour RRC / RLC / MAC entre le réseau de service et le réseau RANCN (3), et le réseau RANCN (3) et la station d'utilisateur (1A, 1B), respectivement.

14. Noeud de commande de réseau radio selon l'une quelconque des revendications précédentes,
**caractérisé en ce que**
il est apte à établir de manière dynamique un nombre de porteuses d'accès à une station d'utilisateur (1A, 1B) connectée au noeud de commande de réseau d'accès radio (3).

15. Procédé de fourniture, à une station d'utilisateur prenant en charge un réseau WLAN, d'un accès aux services d'un réseau fournisseur de services,
**caractérisé en ce que**
il comprend les étapes ci-dessous consistant à :
- établir une connexion de réseau WLAN entre la station d'utilisateur et un point d'accès de réseau WLAN (2A, 2B ; 4) ;
- initier / établir une session IP entre la station d'utilisateur et un noeud de commande de réseau d'accès radio (3) agissant en qualité de passerelle entre le point d'accès de réseau WLAN et le réseau fournisseur de services ;
- adapter, dans un moyen de traitement de connexion du noeud de commande de réseau d'accès radio (3), les protocoles de transport de plan de commande et de plan utilisateur et du réseau fournisseur de services, à des protocoles de transport de réseau WLAN, consistant à :
- établir, dans une unité de commande de connexion (130) du moyen de traitement de connexion, des porteuses d'accès, en vue de fournir des services à la station d'utilisateur ;
- mettre en concordance ou convertir des porteuses d'accès de réseau de service dans / en des paquets de protocoles de transport de réseau WLAN au sein d'une unité de traitement de services de porteuse (140) du moyen de traitement de connexion ; et
- tunnelliser, en utilisant le protocole IP, les protocoles de transport adaptés et réutilisés du réseau fournisseur de services à travers le point d'accès de réseau WLAN (2A, 2B ; 4) connecté au noeud de commande de réseau d'accès radio (3).

16. Procédé selon la revendication 15,
**caractérisé en ce que**
il comprend l'étape ci-dessous consistant à :
- fournir, de manière dynamique, à la station d'utilisateur, un accès à divers services sur des porteuses à commutation de circuits et/ou à commutation de paquets dont la bande passante, le type et/ou la qualité de service sont variables.

17. Procédé selon la revendication 16,
**caractérisé en ce que**
il comprend l'étape ci-dessous consistant à :
- établir de multiples porteuses d'accès simultanément.

18. Procédé selon l'une quelconque des revendications 15 à 17,
**caractérisé en ce que**
le réseau fournisseur de services est un réseau 3GPP, et les protocoles adaptées et réutilisés sont les protocoles RLC / MAC L2 3GPP et RRC L3 3GPP.

19. Procédé selon l'une quelconque des revendications 15 à 18,
**caractérisé en ce que**
le réseau fournisseur de services est le système UMTS, et **en ce que** les protocoles RRC et RLC / MAC adaptés et réutilisés sont utilisés en vue de fournir un accès au réseau fédérateur UMTS par l'intermédiaire de l'interface Iu.

20. Procédé selon l'une quelconque des revendications 18 à 19,
**caractérisé en ce que**
il comprend l'étape ci-dessous consistant à :
- commander, dans le réseau RANCN, l'établissement et la libération de porteuses d'accès, en adaptant et en réutilisant les protocoles RRC et RLC / MAC de sorte qu'ils peuvent être exécutés sur le protocole UDP / IP sur réseau WLAN, IEEE 802.X, entre la station d'utilisateur et le point d'accès de réseau WLAN.

21. Procédé selon l'une quelconque des revendications 15 à 20,
**caractérisé en ce que**
il comprend l'étape ci-dessous consistant à :
- établir de manière dynamique un nombre de porteuses d'accès à la station d'utilisateur connectée au réseau RANCN.
